# EUROPEAN PATENT APPLICATION

(11) **EP 1 342 967 A2**
(43) Date of publication of application: **10.09.2003**
(21) Application number: 03075181.2
(22) Date of filing: 16.01.2003
(51) Int. Cl.: F25D 29/00, G05D 22/00

(54) **A system for controlling humidity inside cold rooms**

(30) Priority: 18.01.2002 IT PN20020003
(71) Applicant: Friulinox S.r.l., 33080 Azzano Decimo (PN) (IT)
(72) Inventor: Filippetto, Federico, 33080 Azzano Decimo (PN) (IT)
(74) Representative: Da Riva, Ermanno

(57) **Abstract**

A system for controlling humidity inside cold rooms obtainable relative to given operating cycles (1; 1') and relative active periods (1; 1') of the refrigerant compressor, through the regulation of operating cycles (2, 3, 4, 5, 6, 7) and relative active periods (2, 3, 4, 5, 6, 7) of the evaporator fan, or through an operating cycle (8) and active period (8) combining the operation of the evaporator fan and of the defrost heater, and in that it affords a further control option, suitable in particular for obtaining particular values of relative humidity for different specific types of preservation, consisting in cycles (2', 3') of which the relative active periods (2'-3') of the evaporator fan and the compensating heater consist in regularly and intermittently generated periods (2'-3') of substantially short duration that are timed to occur simultaneously.

## Description

The present invention relates to a system for controlling relative humidity internally of cold rooms, and in particular a system with the capacity, utilizing programs developed on the basis of empirical tests, to regulate humidity and thus optimize the conditions in an environment where edible substances are stored.

The prior art embraces a variety of systems widely employed for controlling humidity and/or temperature internally of cold rooms. Systems of the type in question are often complex, as well as being difficult, laborious and costly to implement, and moreover, applicable typically in highly specialized sectors rather than on a broad basis. Whilst there are indeed various types of purchasable systems, for example, able to control temperature and relative humidity inside cold rooms to very fine degrees of accuracy, these utilize sensing and thermoregulating and/or humidistat control devices that are highly sophisticated, expensive, difficult to install due to the need for skilled labour, and as a result typified by considerably high costs. There are also simpler systems such as those using bimetallic or bulb sensors, for example, although being much less complex in embodiment these are correspondingly much less accurate in operation, able to measure values that will be no more than an approximation of the parameters needed by the user to control the temperature and/or relative humidity of the environment within the cold room.

Moreover, notwithstanding the progression from electromechanical to electronic temperature control systems, the control obtainable continues to be lacking in accuracy and to rely on just two possible values, namely, a first value referred to a temperature at which relative humidity is lowest, and a second value referred to a temperature at which relative humidity is highest.

A much more refined system, albeit one that does not give precision control over humidity within the cold room, is based on the use of so-called "telethermostats". These remote thermostats may respond to the international standards known as HACCP (Hazard Analysis and Critical Control Points), but offer little more than an ability to memorize any alarms tripped by changes in internal temperature attributable to malfunctions of the cold room, or breaks in the electrical power supply, and such like, whereas they do not enable precision control over the level of relative humidity inside the cold room.

The prior art also embraces humidity control systems using sensors that are especially sensitive, though very costly and in any event notably unreliable in maintaining a given level of humidity, given that they tend to lose their setting and are thus rendered unable to pilot a constant and dependable regulation of the humidity inside a cold room.

The object of the present invention is to overcome the drawbacks described above by providing a simple, practical and accurate system for controlling temperature and relative humidity utilizing only the traditional components of refrigeration equipment, namely compressor, evaporator, condenser, defrost heater, thermostat and internal fan, possibly with the addition of a compensating heater, in combination with an electronic device able to control the operating cycles of these same components.

To convey a fuller understanding of the features and advantages afforded by the present invention in terms of its application and utilization, a preferred solution will now be described by way purely of example and implying no limitation, with reference to the accompanying drawings, which show graphs illustrating the operation of the relative humidity control system in question.
- Figure 1 is a linear time graph showing a number of possible operating cycles programmable for the evaporator fan and the defrost heater of a refrigeration system in relation to a given operating cycle of the compressor, in such a way as to obtain relative humidities suitable for substantially normal cold storage temperatures;
- Figure 2 is a further linear time graph showing a number of possible operating cycles programmable for the evaporator fan and the compensating heater of a refrigeration system, in such a way as to obtain a low relative humidity at "higher" cold storage temperatures.

With reference to the drawings, the figures show representations of preferred operating cycles, indicated by way of example, programmable for the evaporator fan and the defrost and/or compensating heater of cold room refrigeration equipment, in conjunction with a given operating cycle of the compressor.

In particular, the figures are graphs presented as time lines indicating the on/off operating cycles for the compressor, the evaporator fan and the defrost heater, also the compensating heater if pertinent.

In essence, the horizontal elements of the graph consist in lines providing a schematic indication of lapsed time, from left to right, and associated with the horizontal time lines, a plurality of rectangular blocks representing the periods when the various components of the refrigeration system, namely the compressor and/or the evaporator fan and/or the defrost heater, also the compensating heater if any, are brought into operation. More exactly, black denotes an active period when the compressor is in operation, light grey denotes an active period when the evaporator fan is in operation, and dark grey denotes an active period when the defrost and/or compensating heater is in operation.

The active periods of a first cycle 1 are denoted by horizontal rectangular blocks, in this instance coloured black, extending along the relative time line and representing the periods during which the compressor of the refrigeration system is in operation.

Associated with the lines of the cycles numbered 2, 3, 4, 5, 6 and 7 are rectangles of varying length coloured light grey, likewise extending along respective time lines, representing the active periods during which the evaporator fan is in operation. The final cycle, denoted 8, includes periods during which the evaporator fan is caused to operate for a predetermined duration after the compressor has shut off, and, after the fan itself shuts off on each occasion, a short period when the defrost heater is activated; this in turn is followed by a short pause, whereupon the evaporator fan is restarted prior to the restart of the compressor.

It will be observed at this point that the line of the graph representing the compressor indicates not only the operating cycle of the compressor itself, but at the same time, the relationship of this same cycle to the single cycles indicated by the lines below, programmed in such a way as to obtain the desired levels of relative humidity.

Certain possible cycles are illustrated by way of example in the accompanying drawings; these and the relative effects associated with them will now be described.

The cycles in question are based on empirical surveys and laboratory observations that have led to the realization of various synergical actions between compressor, evaporator, evaporator fan and defrost heater.

After conducting a number of laboratory tests, it was observed under different conditions and/or applications that given temperature and relative humidity levels inside the cold room could be obtained by splitting the operating cycles of the evaporator fan, and accordingly, these empirical test results were applied to standard models of response in developing a menu, implemented by a selectively programmable electronic device, referred to a given type of edible substance and therefore to the level of relative humidity best suited to its preservation. In the specific case in point, the refrigeration system was equipped with an electronic controller having two displays, one digital, the other liquid crystal (LCD), which in combination with a microprocessor would allow not only of controlling the temperature but also of selecting the desired value of relative humidity in the cold room, according to a system of operation that will now be described in detail.

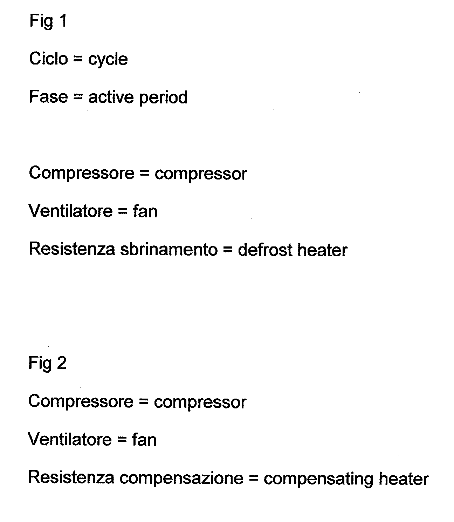

Still referring to figure 1, it will be seen in the case of a first example, the cycle denoted 2, that during the period 1 of cycle 1 when the compressor is in operation, denoted by the black rectangles, the evaporator fan is operated in periods 2 of short duration, denoted by grey rectangles, generated intermittently at regular intervals. Experiments show that in this way it is possible to obtain a minimum value of relative humidity inside the cold room.

In a second type of operating cycle, denoted 3 in figure 1, again with the compressor operating as indicated in cycle 1 described above, the evaporator fan is activated and deactivated in such a way that its operating cycle is identical to that of the compressor, cycle 1. This cycle 3 gives a higher level of humidity than obtained with the cycle 2 first described. Referring now to the cycles denoted 4, 5 and 6 in the graph of figure 1, it will be seen that the compressor operates in the same way as described above (cycle 1, black rectangle), whereas the duration of the active periods 4, 5 and 6 programmed for the evaporator fan is extended progressively, in such a way as to obtain a correspondingly gradual increase in the level of relative humidity inside the cold room.

A further solution is that of the cycle denoted 7 in figure 1, where the compressor again operates in the same way as described above (cycle 1, black rectangle), whilst the evaporator fan is operated continuously, without any interruption whatever (cycle 7 and active period 7 identical). This type of cycle will produce the "maximum" level of relative humidity obtainable inside the cold room.

To increase the level of humidity inside the cold room still further, always assuming that the compressor operates to the same cycle 1 and active period 1 (black rectangle) as specified in all of the examples described thus far, the cycle denoted 8 can be adopted. In this instance, the duration of the active period 8 programmed for the evaporator fan is greater than the active period 1 of the compressor cycle 1. More exactly, the fan operates for a period 8 that commences before the compressor cuts in (period 1, cycle 1) and terminates after the compressor has shut off, and to increase the relative humidity to a level even higher than those described above, the defrost heater is activated for a period of short duration denoted by a small rectangle of dark grey colour, following the active period 8 of the fan cycle 8 (light grey), in such a way as to evaporate frost or condensate from the coil.

Applying this type of control to the evaporator fan, in a context of substantially normal cold storage temperatures, it becomes possible in the cases of cycles 2, 3, 4, 5, 6 and 7 and the relative active periods 2, 3, 4, 5, 6 and 7, again with the compressor operating to the same cycle 1 and active period 1 and on the basis of empirical experimental models, to obtain notably exact values of relative humidity internally of the cold room, ranging from the minimum afforded typically by cycle 2 to the maximum of cycle 7. In addition, experimental trials show that it is possible to obtain a further increase in relative humidity within the enclosure by way of cycle 8, in which the cyclic operation of the evaporator fan is accompanied by that of the defrost heater.

Referring to figure 2, the possibility exists also of controlling relative humidity within a cold room likewise with the compressor operating as illustrated in figure 1, but at "higher" storage temperatures and low humidity, that is to say, the preferred conditions for particular substances such as chocolate, and other foods similar to chocolate in terms of the type of preservation required

More exactly, and as indicated clearly in figure 2, the operating cycle of the compressor, denoted 1' in this instance, will be similar in all respects to cycle 1 in the graph of figure 1.

The cycle 1' in question includes an active period 1' denoted by a black rectangle, when the compressor is in operation.

The other cycles 2' and 3' indicated, respectively of the evaporator fan and of the compensating heater, comprise respective active periods 2' and 3' that are similar one to another considered in relation to the active period 1' of the compressor, coinciding in terms of timing and duration, generated substantially regularly and intermittently substantially in short bursts, and accordingly, similar to the period 2 of cycle 2 in figure 1.

Using the cycle indicated in figure 2, therefore, the level of relative humidity inside cold rooms can be controlled with ease to the end of establishing ideal values, where the need is for relatively "high" temperatures in conjunction with low moisture, in order to preserve edible substances that require preserving conditions different to the general run of foods.

In conclusion, the system according to the invention for controlling the operating cycles of the evaporator fan in refrigeration equipment, utilizing programmable electronic devices, is based on the results of previously conducted empirical trials and affords the facility of setting notably precise and definite parameters for regulating the level of relative humidity in a cold room. The system in question, based on the combined operation of compressor, fan and heater in typical refrigeration equipment, is simple, inexpensive and easily implemented using commonplace, familiar and readily available components; moreover, the only departure from a standard deployment of these conventional components consists in the adoption of an electronic device and the concept of programming the management of the cycles described and illustrated herein, which will be stored in the memory of the device; program data is the outcome of thorough-going experimental laboratory tests, which allow the required level of relative humidity to be obtained inside the cold room with minimal error and on the basis of the edible substances stored therein.

It will be appreciated that the compressor/fan/heater operating cycles described and illustrated might be modified in various ways, likewise the electronic circuitry and the management program ultimately adopted, though without straying from the scope of the foregoing specification or the spirit of the appended claims and of the accompanying drawings, and therefore from within the bounds of protection afforded to the industrial invention.

## Claims

1. A system for controlling humidity inside cold rooms, **characterized in that** it is obtainable relative to given operating cycles (1; 1') and relative active periods (1; 1') of the refrigerant compressor, through the regulation of operating cycles (2, 3, 4, 5, 6, 7) and relative active periods (2, 3, 4, 5, 6, 7) of the evaporator fan, or through an operating cycle (8) and active period (8) combining the operation of the evaporator fan and of the defrost heater, and **in that** it affords a further control option, suitable in particular for obtaining particular values of relative humidity for different specific types of preservation, consisting in cycles (2', 3') of which the relative active periods (2'-3') of the evaporator fan and the compensating heater consist in regularly and intermittently generated periods (2'-3') of substantially short duration that are timed to occur simultaneously.

2. A system for controlling humidity inside cold rooms, as in claim 1, wherein the different values of relative humidity inside the cold room are obtained utilizing a electronic temperature control system and display together with an electronic program consisting in a plurality of menus such as will allow selection of the relative humidity inside the cold room by means of simple control functions referred to previously determined parameters obtained on the basis of laboratory tests and stored in an erasable programmable read only memory (EPROM).
